# EUROPÄISCHE PATENTANMELDUNG

(11) **EP 1 300 696 A2**
(43) Veröffentlichungstag der Anmeldung: **09.04.2003**
(21) Anmeldenummer: 02020662.9
(22) Anmeldetag: 13.09.2002
(51) Int. Cl.: G01T 1/202

(54) **Röntgenbildspeicher und Verfahren zur Untersuchung eines Patienten nach dem Prinzip der Subtraktionsangiographie**

(30) Priorität: 26.09.2001 DE 10147420
(71) Anmelder: SIEMENS AKTIENGESELLSCHAFT, 80333 München (DE)
(72) Erfinder: Fuchs, Manfred, 90459 Nürnberg (DE); Hell, Erich, Dr., 91054 Erlangen (DE); Knüpfer, Wolfgang, Prof., 91054 Erlangen (DE); Mattern, Detlef, Dr., 91056 Erlangen (DE)

(57) **Zusammenfassung**

Ein Röntgenbildspeicher (1) zum Speichern eines Röntgenstrahlungsbildes, insbesondere für die Subtraktionsangiographie, weist zwei Speicherschichten (7, 11) mit voneinander unterschiedlichen Speicherleuchtstoffen (L1, L2) auf, die vorzugsweise auf einander gegenüberliegenden Seiten eines strahlungstransparenten Substrats (13) angebracht sind. Bei einem Verfahren zur Untersuchung eines Patienten (29) nach dem Prinzip der Subtraktionsangiographie wird dem Patienten (29) ein Kontrastmittel (KM) verabreicht und danach wird der Patient (29) mit Röntgenstrahlen (12A) durchstrahlt. Die den Patienten (29) durchdringenden Röntgenstrahlen (12B) werden mittels zweier Speicherschichten (7, 11) detektiert, die unterschiedliche Speicherleuchtstoffe (L1, L2) enthalten. Die in den Speicherschichten (7, 11) enthaltenen Teilbilder (T1, T2) werden gesondert - nacheinander oder simultan - ausgelesen und anschließend linear miteinander kombiniert, insbesondere subtrahiert. Es ist auch eine Auslesevorrichtung (131) zum Auslesen des Röntgenbildspeichers (1) beschrieben.

## Beschreibung

Die Erfindung betrifft einen Röntgenbildspeicher zum Speichern eines Röntgenstrahlungsbildes, insbesondere für die Subtraktionsangiographie, mit einer einen ersten Speicherleuchtstoff enthaltenden ersten Speicherschicht. Die Erfindung bezieht sich außerdem auf die Verwendung eines solchen Röntgenbildspeichers für die Subtraktionsangiographie sowie auf ein Verfahren zur Untersuchung eines Patienten nach dem Prinzip der Subtraktionsangiographie.

Zum Zwecke der vielseitigen Verwendbarkeit sowohl für Lumineszenzuntersuchungen (im Bereich des sichtbaren Lichts) als auch für Untersuchungen mit höherenergetischen Strahlen ist aus der US 6,236,058 B1 ein Bildaufnahmesystem bekannt, welches eine erste stimulierbare Leuchtstoffschicht für höherenergetische Strahlen und eine zweite stimulierbare Leuchtstoffschicht für sichtbares Licht aufweist.

Aus EP 1 065 523 A2 und DE 38 20 582 A1 sind Verfahren und Vorrichtungen zum Auslesen eines in einem Leuchtschirm gespeicherten Strahlungsbildes bekannt. Speicherfolien sind außerdem beschrieben in US 5,877,508, US 5,880,476 und DE 40 25 980 C1.

Im Bereich der Röntgentechnik sind verschiedene Bildsubtraktionsverfahren bekannt, bei denen zwei Bilder unter voneinander unterschiedlichen Bedingungen aufgenommen und voneinander subtrahiert werden.

Eine erste Gruppe solcher Subtraktionsverfahren führt eine Art "Energiesubtraktion" aus. Das Untersuchungsobjekt wird mehrfach Strahlung mit unterschiedlicher Energieverteilung ausgesetzt und die hieraus resultierenden Bilder werden subtrahiert, um auf diese Weise Strukturen aufzulösen, die bei monoenergetischer Untersuchung nicht sichtbar geworden wären.

Zu dieser Gruppe zählt auch eine Variante, wonach das Untersuchungsobjekt nur einmal Strahlung ausgesetzt werden muss und wobei die Strahlung nach Durchtritt durch das Untersuchungsobjekt nach Aufzeichnung mittels einem ersten Detektormedium energieabhängig gefiltert wird und dann auch noch von einem zweiten Detektormedium erfasst wird (one-shot energy subtraction). Derartige Verfahren sind zum Beispiel bekannt aus US 4,526,862 und US 5,038,037.

Gemäß US 4,526,862 sind zwei Verstärkerschichten, gegebenenfalls mit voneinander unterschiedlichen Materialien, vorhanden, denen je ein photographischer Film als Bildspeicher zugeordnet ist. Die zuvorderste Verstärkerschicht wirkt als energieabhängiger Filter für die rückwärtige Verstärkerschicht. Das Auslesen des Doppelfilmpacks mittels optischer Abtastung erfordert wegen der nötigen Unterscheidbarkeit der Hochenergieinformation von der Niedrigenergieinformation das Einbringen von Codiergittern in das Verstärkerschichten-Film-System. Außerdem müssen in nachteiliger Weise die photographischen Filme vor dem Auslesen zunächst entwickelt werden.

Gemäß US 5,038,037 sind zwei speichernde und stimulierbare Leuchtstoffschichten vorhanden, die durch einen energieabhängigen Filter, zum Beispiel auf Kupferbasis, voneinander getrennt sind. Die Leuchtstoffschichten sind durch optische Abtastung direkt auslesbar.

Die zweite Gruppe von Subtraktionsverfahren stellt quasi "Zeit-Subtraktionsverfahren" dar. Dabei wird dem Untersuchungsobjekt ein Kontrastmittel verabreicht. Es werden Bilder mit und ohne Kontrastmittel aufgenommen und voneinander subtrahiert.

Zur zweiten Gruppe gehört auch die (digitale) Subtraktionsangiographie. Dies ist ein röntgendiagnostisches Verfahren, mit dem beispielsweise Gefäßbilder isoliert darstellbar sind. Aus dem Buch von Heinz Morneburg mit dem Titel "Bildgebende Systeme für die medizinische Diagnostik", 3. Auflage, 1995, Publicis MCD Verlag, Seite 350 ff., ist es bekannt, von ein und demselben Ort im zeitlichen Abstand nacheinander zwei Aufnahmen anzufertigen. Dem Patient wird ein Kontrastmittel injiziert. Die erste Aufnahme, das sogenannte Maskenbild, wird noch ohne Kontrastmittel im Zielgebiet aufgenommen, eine zweite Aufnahme, das sogenannte Füllungsbild, bei von mit Kontrastmittel gefüllten Gefäßen. Die beiden Bilder werden voneinander subtrahiert, wobei deckungsgleiche Bildanteile von störenden hochkontrastigen Bilddetails, wie z. B. Knochen oder Weichteile, eliminiert werden, so dass das mit Kontrastmittel gefüllte Blutgefäß hiervon freigestellt und somit besser dargestellt wird.

Problematisch bei dieser Vorgehensweise ist, dass das Maskenbild und das Füllungsbild in einem zeitlichen Mindestabstand von einigen Sekunden aufgenommen werden müssen, weil diese Zeit nötig ist, bis das Kontrastmittel, z. B. eine Jodsalzlösung, in die Gefäße im Zielgebiet, also im Bildfeld, transportiert worden ist. In diesem Zeitraum führt eine Relativbewegung einer der beteiligten Komponenten, z. B. der Röntgenröhre, des Patienten oder des Röntgendetektors, zu einer Versetzung der wegzusubtrahierenden Bilddetails in den beiden Bildern, so dass im Differenzbild störende Konturen und Schatten erscheinen, die als Deckungsfehler bezeichnet werden. Die Wahrscheinlichkeit des Auftretens solcher Artefakte wächst mit der Zeitdifferenz zwischen der Aufnahme von Maskenbild und Füllungsbild. Ein Teil der Deckungsfehler ist durch eine Bildnachverarbeitung, einen sogenannten Pixelshift, ganz oder teilweise kompensierbar. Eine solche Kompensation hat natürliche Grenzen, da insbesondere der Patient kein in sich starres Objekt ist. Falls sich der Patient in der Zeitspanne zwischen Masken- und Füllungsbild beispielsweise leicht krümmt oder verbiegt, was auch durch noch so aufwendige Positionier- oder Lagerungshilfen oder Stützen nicht vermeidbar ist, sind Verzerrungen die Folge, welche auch von einer nachgeschalteten Software kaum korrigierbar sind.

Der Erfindung liegt die Aufgabe zugrunde, einen Röntgenbildspeicher anzugeben, mit welchem die Fehleranfälligkeit bei einem auf der Subtraktion zweier Bilder beruhenden Röntgenuntersuchungsverfahren, insbesondere bei der Subtraktionsangiographie, vermindert ist. Es soll auch ein Verfahren zur Untersuchung eines Patienten nach dem Prinzip der Subtraktionsangiographie angegeben werden, bei welchem die Fehleranfälligkeit verbessert ist.

Die auf einen Röntgenbildspeicher bezogene Aufgabe wird in Bezug auf den eingangs genannten Röntgenbildspeicher gemäß der Erfindung gelöst durch eine zweite Speicherschicht, die einen von dem ersten Speicherleuchtstoff unterschiedlichen zweiten Speicherleuchtstoff enthält.

Der erfindungsgemäße Röntgenbildspeicher basiert somit auf einer Kombination zweier unterschiedlicher Speicherleuchtstoffe. Die beiden Speicherleuchtstoffe und somit die beiden Speicherschichten haben eine unterschiedliche spektrale Empfindlichkeit, so dass das Kontrastmittel bei einer Subtraktionsangiographie, insbesondere das Jodkontrastmittel, unterschiedlich bewertet wird. Dadurch ist es in vorteilhafter Weise möglich, das Maskenbild und das Füllungsbild ohne Zeitverzögerung pixelgenau aufzunehmen. Deckungsfehler sind somit weitestgehend ausgeschlossen. Der Röntgenbildspeicher ist insbesondere für die digitale Subtraktionsröntgentechnik, insbesondere für die Subtraktionsangiographie, anwendbar.

Vorzugsweise sind die beiden Speicherschichten starr miteinander verbunden oder starr miteinander verbindbar. Dadurch ist gewährleistet, dass eine Relativbewegung zwischen den beiden Speicherschichten unterbunden ist und die Bildinformation in den beiden Speicherschichten elektronisch pixelgenau auslesbar ist, ohne dass eine softwaremäßige Nachkorrektur (Pixelshift oder dergleichen) erforderlich wäre.

Nach einer besonders bevorzugten Ausführungsform sind die beiden Speicherschichten auf einander gegenüberliegenden Seiten eines strahlungstransparenten Substrats angebracht. Vorzugsweise sind sie dort, insbesondere nadelförmig, aufgedampft. Das Anbringen der beiden Speicherschichten auf einem gemeinsamen Substrat erlaubt sowohl eine verzögerungsfreie pixelgenaue Aufnahme der beiden Teilbilder als auch ist damit ein kompakter, einfach handzuhabender Röntgenbildspeicher realisierbar.

Bevorzugt besteht das Substrat ganz oder zum größten Teil aus einem Material mit einer effektiven Kernladungszahl von weniger als 30, vorzugsweise von weniger als 25 und insbesondere von weniger als 20 oder von weniger als 15, wobei das Material insbesondere Aluminium oder Kohlenstoff ist. Dadurch ist gewährleistet, dass das Substrat in hohem Maße strahlungstransparent ist, also die Röntgenstrahlung beim Durchtritt auf die der Strahlungsquelle abgewandten Seite des Substrats nur unwesentlich schwächt.

Das Substrat ist vorzugsweise als Folie ausgebildet. Das Substrat oder die Trägerfolie weist beispielsweise eine Dicke im Bereich von 0,05 mm bis 0,5 mm, insbesondere eine Dicke von 0,2 mm auf, und absorbiert somit möglichst wenig Röntgenstrahlung.

Der Röntgenbildspeicher nach der Erfindung hat die Fähigkeit, latente Bilder über lange Zeit zu speichern. Die Speicherfähigkeit der Speicherleuchtstoffe ist dadurch erreicht, dass in einem Lumineszenzstoff in der elektronischen energetischen Bandlücke Haftstellen durch entsprechende Dotierung, d. h. z. B. durch den gezielten Einbau von Gitterfehlern, erzeugt sind. Von Röntgenstrahlung ins Leitungsband angeregte Elektronen fallen nun entweder in die tieferen Rekombinationszentren, wobei spontane Emission auftritt, oder sie werden von den vorhandenen Haftstellen eingefangen. Je nach verwendetem Leuchtstofftyp bleiben diese angeregten Haftstellen über Stunden oder auch über Wochen stabil. Bei Anregung mit Licht einer bestimmten Wellenlänge - üblicherweise liegt diese im roten bis grünen Spektralbereich - können die Haftstellen innerhalb weniger Mikrosekunden ausgelesen werden. Das zum Auslesen eingestrahlte Stimulationslicht hebt die in den Haftstellen gesammelten Elektronen wieder in das Leitungsband. Ein Teil dieser Elektronen wird erneut von Haftstellen eingefangen, ein anderer Teil fällt dagegen unter Aussendung von Emissionslicht in tiefere Energieniveaus. Das Emissionslicht ist von einem fotoelektrischen Empfänger detektierbar und zur elektronischen Bilderzeugung verwendbar. Das Prinzip von Speicherfolien ist auch in dem bereits genannten Buch von Morneburg auf Seite 270 ff. beschrieben.

Hinsichtlich der Durchlässigkeit des Substrats für das zum Auslesen eingestrahlte Stimulationslicht sind zwei Varianten unterscheidbar:

Nach einer ersten Variante ist das Substrat lichtundurchlässig. Dadurch fungieren die beiden Speicherschichten quasi als zwei voneinander unabhängige Detektoren, die auch vollständig unabhängig voneinander und somit störungsfrei auslesbar sind. Hierzu werden die beiden Speicherschichten beispielsweise voneinander gegenüberliegenden Seiten des Substrats mit Licht, beispielsweise gleicher Wellenlänge, beaufschlagt, ohne dass das von der einen Seite kommende Licht auf die gegenüberliegende Speicherschicht gelangen könnte.

Nach einer zweiten Variante ist das Substrat für eine Lichtwellenlänge transparent und für eine andere Lichtwellenlänge undurchlässig, wobei das Substrat vorzugsweise als Kantenoder Bandfilter ausgebildet ist. Dadurch ist es in vorteilhafter Weise möglich, den Röntgenbildspeicher bei Verwendung zweier unterschiedlicher Stimulationswellenlängen von nur einer Seite des Substrats ausgehend auszulesen.

Weitere bevorzugte Ausführungsformen betreffen die Auswahl der Speicherleuchtstoffe:

Der erste Speicherleuchtstoff enthält vorzugsweise ein Rubidiumhalogenid, insbesondere Rubidiumbromid, Rubidiumjodid und/oder Rubidiumchlorid.

Der zweite Speicherleuchtstoff enthält vorzugsweise ein Cäsiumhalogenid, insbesondere Cäsiumbromid, Cäsiumjodid und/oder Cäsiumchlorid.

Die genannten Speicherleuchtstoffe haben sich - insbesondere im Zusammenhang mit einem jodhaltigen Kontrastmittel - als besonders geeignet herausgestellt.

Als Speicherleuchtstoffe kommen auch alle in der EP 1 065 523 A2 beschriebenen Speicherleuchtstoffe in Frage.

Zur Erhöhung der Speicherfähigkeit ist eines der Halogenide oder beide Halogenide dotiert, insbesondere mit Europium, Gallium, Thallium und/oder mit Indium.

Nach einer bevorzugten Weiterbildung des Röntgenbildspeichers weist dieser wenigstens eine weitere Speicherschicht auf, die einen von dem ersten Speicherleuchtstoff und dem zweiten Speicherleuchtstoff unterschiedlichen weiteren Speicherleuchtstoff enthält.

Der weitere Speicherleuchtstoff enthält insbesondere eines oder mehrere der genannten Halogenide und vorzugsweise ein Halogenid eines anderen Metalls, insbesondere von Strontium oder Barium.

Bei drei oder mehr Speicherschichten genügt es, falls insgesamt ein als Träger fungierendes Substrat vorhanden ist. Die Speicherschichten sind entweder ohne Zwischenschicht übereinander auf dem Substrat angeordnet oder zwischen einzelnen Speicherschichten sind spektrale Filterschichten vorhanden, die beispielsweise als Kantenfilter mit einer Absorptionskante im Bereich der zum Auslesen verwendeten Wellenlängen ausgebildet sind. Die Filterschichten erlauben ein selektives Auslesen der von ihnen getrennten Speicherschichten mittels unterschiedlicher Stimulationswellenlängen.

Mit besonderem Vorteil wird der Röntgenbildspeicher nach der Erfindung bei der Subtraktionsangiographie, bei der einem Patienten ein Kontrastmittel verabreicht wird, derart verwendet, dass die beiden Speicherleuchtstoffe und/oder das Kontrastmittel derart gewählt werden, dass im Bereich des applizierten Röntgenspektrums, also im Bereich des Röntgenröhrenspektrums, die Schwerpunkte der spektralen Empfindlichkeiten der beiden Speicherschichten auf unterschiedlichen Seiten bezüglich einer Empfindlichkeitskante des Kontrastmittels zu liegen kommen. Simulationen haben nämlich gezeigt, dass die Kontrastverstärkung im Wesentlichen dadurch zustande kommt, dass Bildkontraste ohne Kontrastmittel in beiden Speicherschichten etwa gleich sind und dadurch in der Differenz nahezu verschwinden.

Vorzugsweise kommen die K-Absorptionskanten der beiden Speicherleuchtstoffe auf unterschiedlichen Seiten bezüglich der Empfindlichkeitskante des, insbesondere jodhaltigen, Kontrastmittels zu liegen.

Die auf ein Subtraktionsangiographie-Verfahren bezogene Aufgabe wird gemäß der Erfindung dadurch gelöst, dass
a) dem Patienten ein Kontrastmittel verabreicht wird, und danach
b) der Patient mit Röntgenstrahlen durchstrahlt wird,
c) die den Patienten durchdringenden Röntgenstrahlen mittels zweier Speicherschichten detektiert werden, die unterschiedliche Speicherleuchtstoffe enthalten,
d) die in den Speicherschichten enthaltenen Teilbilder gesondert - nacheinander oder simultan - ausgelesen werden, und
e) die beiden Teilbilder linear kombiniert, insbesondere voneinander subtrahiert, werden.

Vorzugsweise wird die Detektion der Röntgenstrahlen in den beiden Speicherschichten gleichzeitig oder unmittelbar nacheinander durchgeführt. Beispielsweise wird die Detektion in den beiden Speicherschichten mit einem seitlichen Abstand von weniger als 10 s oder 5 s durchgeführt.

Eine solche Vorgehensweise erlaubt in vorteilhafter Weise eine weitestgehend verzögerungsfreie Aufnahme von Masken und Füllungsbild, quasi in einem Arbeitsschritt. Deckungsfehler sind auf diese Weise unterbunden.

Die im Zusammenhang mit dem Röntgenbildspeicher genannten weiteren Vorteile und Ausgestaltungen gelten für das Verfahren analog. Beispielsweise sind die beiden Speicherschichten wie bei dem Röntgenbildspeicher nach der Erfindung auf einem gemeinsamen Substrat ausgebildet. Die beiden Speicherschichten können aber auch als an sich bekannte einzelne Speicherfolien ausgebildet sein, die nur gemeinsam und zeitgleich oder unmittelbar nacheinander mit Röntgenstrahlung belichtet werden.

Vorzugsweise sind zum simultanen Auslesen die beiden Speicherschichten optisch voneinander getrennt und es wird auf beide Speicherschichten gesondert Stimulationslicht gesendet und vom Stimulationslicht angeregtes Emissionslicht jeweils gesondert detektiert.

Die optische Trennung der beiden Speicherschichten ist in dem Falle, in welchem diese auf einander gegenüberliegenden Seiten eines strahlungstransparenten Substrats angebracht sind, durch dieses gemeinsame Substrat gegeben, das dann z. B. lichtundurchlässig ist.

Bei Verwendung von einzelnen Speicherfolien werden diese insbesondere nacheinander mit einem Scanner, insbesondere mit einem "Flying-Spot"-Scanner ausgelesen. Bei einem solchen Nacheinander-Auslesen kann es nötig sein, vor Überlagerung der beiden von den Speicherschichten erzeugten Teilbilder die Teilbilder relativ zueinander, insbesondere softwaremäßig und/oder automatisch, einem konstanten Pixelshift zu unterziehen, weil durch Justage- oder Einlege-Ungenauigkeiten beim Einbringen der einzelnen Speicherfolien in eine beispielsweise vorhandene Auslesevorrichtung eine exakte pixelgenaue Auslesung unter Umständen nicht gegeben ist.

Ein Verfahren zum Auslesen eines zwei Speicherschichten mit voneinander unterschiedlichen Speicherleuchtstoffen aufweisenden Röntgenbildspeichers verwendet eine Auslesevorrichtung mit
a) einem ersten Abtastkopf zum Auslesen der ersten Speicherschicht, umfassend eine erste Beleuchtungseinrichtung zum abtastenden Beleuchten der ersten Speicherschicht mit Stimulationslicht, und eine erste Detektoreinrichtung zur Detektion des vom Stimulationslicht der ersten Beleuchtungseinrichtung angeregten Emissionslichts, und mit
b) einem zweiten Abtastkopf zum Auslesen der zweiten Speicherschicht, umfassend eine zweite Beleuchtungseinrichtung zum abtastenden Beleuchten der zweiten Speicherschicht mit Stimulationslicht, und eine zweite Detektoreinrichtung zur Detektion des vom Stimulationslicht der zweiten Beleuchtungseinrichtung angeregten Emissionslichts.

Ein solches Verfahren erlaubt das simultane Auslesen der beiden Speicherschichten des erfindungsgemäßen Röntgenbildspeichers, so dass der gesamte Auslesevorgang sehr schnell, insbesondere in wenigen Sekunden, beendet ist.

Mit besonderem Vorteil sind dabei die beiden Abtastköpfe positionsstarr miteinander verbunden. Durch diese relative Positionsstarrheit sind die beiden unabhängigen Detektoren, welche die beiden Speicherschichten darstellen, pixelgenau auslesbar. Mit anderen Worten: Die Registrierung der von den beiden Speicherschichten stammenden Teil- oder Einzelbilder ist pixelgenau, so dass eine besonders präzise Überlagerung der beiden Teilbilder zu einem Gesamtbild möglich ist, ohne dass zwingend eine Nachkorrektur, beispielsweise ein softwaremäßiger Pixelshift, nötig wäre.

Zweckmäßigerweise ist zur flächenmäßigen Abtastung der Speicherschichten eine Abtasteinrichtung zur Erzeugung einer Abtastbewegung des Stimulationslichts vorhanden.

Diese umfasst vorzugsweise mindestens einen rotierenden Spiegel und/oder ein Transportsystem zum Bewegen des Bildspeichers. Beispielsweise ist durch den rotierenden Spiegel eine zeilenmäßige Abtastung in einer ersten Dimension, und durch das Transportsystem eine Abtastung in einer zweiten Dimension realisierbar.

Die beiden Beleuchtungseinrichtungen umfassen jeweils einen gesonderten Laser oder einen gemeinsamen Laser.

Die beiden Detektoreinrichtungen können jeweils einen gesonderten Zeilendetektor aufweisen, insbesondere einen Diodenoder CCD-Zeilendetektor.

Insbesondere in diesem Zusammenhang ist es zweckmäßig, falls die beiden Beleuchtungseinrichtungen jeweils eine gesonderte Leuchtdiodenzeile aufweisen. Bei dieser Ausgestaltung könnte beispielsweise der rotierende Spiegel entfallen, weil die Auflösung in einer Dimension durch die längsausgedehnte Leuchtdiodenzeile zusammen mit dem zugeordneten Zeilendetektor realisiert ist.

Bei der Vorrichtung nach der Erfindung ist die Wellenlänge des Stimulationslichts vorzugsweise derart, dass das Substrat des Röntgenbildspeichers für das Stimulationslicht undurchlässig ist. Dadurch können die als zwei unabhängige Detektoren fungierenden Speicherschichten auch vollständig unabhängig voneinander, und somit störungsfrei, ausgelesen werden. Eine eventuelle Trennung oder Selektion von Auslesesignalen kann dann entfallen.

Nach einer anderen bevorzugten Ausgestaltung ist in der Vorrichtung der Röntgenbildspeicher derart positionierbar, dass von den beiden Beleuchtungseinrichtungen Stimulationslicht aus entgegengesetzten Richtungen auf den Röntgenbildspeicher sendbar ist. Dadurch ergibt sich eine kompakte Bauweise ebenso wie ein schneller Auslesevorgang.

Nach einer besonders bevorzugten Weiterbildung weist die Vorrichtung eine Auswerte-Einrichtung auf, die mit den beiden Detektoreinrichtungen in Verbindung steht und der von den beiden Detektoreinrichtungen erfasste Teilbilder zuführbar sind.

Mit der Auswerte-Einrichtung ist vorzugsweise ein pixelweise überlagertes, insbesondere linear kombiniertes oder subtrahiertes, Gesamtbild generierbar, das beispielsweise auf einem Bildschirm anzeigbar ist.

Im Rahmen der Erfindung liegt auch die Erkenntnis, dass die eingangs genannte Aufgabe auch mit einem Röntgenbilddetektor zur Detektion eines Röntgenstrahlungsbildes, insbesondere für die Subtraktionsangiographie, lösbar ist, der einen Festkörperbildwandler aufweist, umfassend eine elektronisch auslesbare Photodioden-Matrix, auf der eine einen Szintillatorstoff enthaltende Szintillatorschicht aufgebracht ist, sowie wenigstens eine einen Speicherleuchtstoff enthaltende Speicherschicht, wobei der Szintillatorstoff und der Speicherleuchtstoff voneinander unterschiedlich sind und unterschiedliche spektrale Empfindlichkeiten aufweisen. Ein solcher Festkörperbildwandler ist beispielsweise ein sogenannter CsJ-a:Si-Flachdetektor.

Die Erfindung geht hierbei davon aus, dass eine der im Zusammenhang mit dem Röntgenbildspeicher nach der Erfindung genannten Speicherschichten durch den Festkörperbildwandler ersetzbar ist. Mit anderen Worten: Der Festkörperbildwandler kann als Speicherschicht im Sinne des beschriebenen Röntgenbildspeichers oder im Sinne des beschriebenen Verfahrens zur Untersuchung eines Patienten nach dem Prinzip der Subtraktionsangiographie verstanden werden. Beispielsweise wird hierbei das Maskenbild vom Festkörperbildwandler und das Füllungsbild von der Speicherschicht aufgenommen.

In der Speicherschicht wird die Speicherfähigkeit beispielsweise durch eine entsprechende Dotierung erzeugt, wohingegen beim Festkörperbildwandler die Speicherfähigkeit elektronisch gegeben ist.

Zusätzlich zu dem Speicherleuchtstoff können auch ein oder mehrere weitere Speicherleuchtstoffe vorhanden sein.

Der Festkörperbildwandler wird über die Photodioden-Matrix elektronisch ausgelesen. Zum Auslesen der Speicherschicht kann eine Auslesevorrichtung mit einem Abtastkopf verwendet werden, wie er im Zusammenhang mit der Auslesevorrichtung nach der Erfindung beschrieben ist.

Die im Zusammenhang mit dem Röntgenbildspeicher nach der Erfindung und mit dem Untersuchungsverfahren nach der Erfindung genannten bevorzugten Ausführungsformen und Vorteile gelten für den Röntgenbilddetektor analog.

Der Röntgenbildspeicher, die Auslesevorrichtung, das Verfahren nach der Erfindung und der Röntgenbilddetektor nach der Erfindung werden nachfolgend anhand von Ausführungsbeispielen und der Figuren 1 bis 16 näher erläutert. Es zeigen:
- Figur 1: einen Röntgenbildspeicher nach der Erfindung in einer ersten Ausführungsform in einer Schnittdarstellung,
- Figur 2: einen Röntgenbildspeicher nach der Erfindung in einer zweiten Ausführungsform in einer Schnittdarstellung,
- Figur 3: einen Röntgenbildspeicher nach der Erfindung in einer dritten Ausführungsform in einer Schnittdarstellung,
- Figur 4: einen ersten Verfahrensschritt (Bilderfassung) des Röntgenverfahrens nach der Erfindung,
- Figur 5: einen zweiten und dritten Verfahrensschritt (Bildauslesen und Bildauswerten) des Röntgenverfahrens nach der Erfindung in einer ersten Variante,
- Figur 6: den zweiten und dritten Verfahrensschritt (Bildauslesen und Bildauswerten) des Röntgenverfahrens nach der Erfindung in einer zweiten Variante,
- Figur 7: eine zum Auslesen eines Röntgenbildspeichers nach der Erfindung geeignete Auslesevorrichtung gemäß einem ersten Ausführungsbeispiel,
- Figur 8: eine zum Auslesen eines Röntgenbildspeichers nach der Erfindung geeignete Auslesevorrichtung gemäß einem zweiten Ausführungsbeispiel in einer Draufsicht,
- Figur 9: die Auslesevorrichtung der Figur 8 in einer Querschnittsdarstellung,
- Figur 10: verschiedene Spektralverläufe in stark schematisierter und vereinfachter Darstellung zum Verständnis der Wirkungsweise der unterschiedlichen Speicherschichten bei dem Röntgenbildspeicher nach der Erfindung,
- Figur 11: den spektralen Verlauf der Massenschwächungskoeffizienten von Jod (als Kontrastmittel) im Vergleich zu vorzugsweise verwendeten Speicherleuchtstoffen,
- Figur 12: ein Summenbild als Ergebnis des Röntgenverfahrens nach der Erfindung,
- Figur 13: ein Differenzbild als Ergebnis des Röntgenverfahrens nach der Erfindung bei der gleichen Körperregion wie in Figur 12,
- Figur 14: den quantitativen Verlauf der Intensität des Summenbildes der Figur 12 bei Projektion des Summenbildes auf eine horizontale Achse,
- Figur 15: den quantitativen Verlauf der Intensität des Differenzbildes der Figur 13 bei Projektion des Differenzbildes auf eine horizontale Achse, und
- Figur 16: einen Röntgenbilddetektor nach der Erfindung.

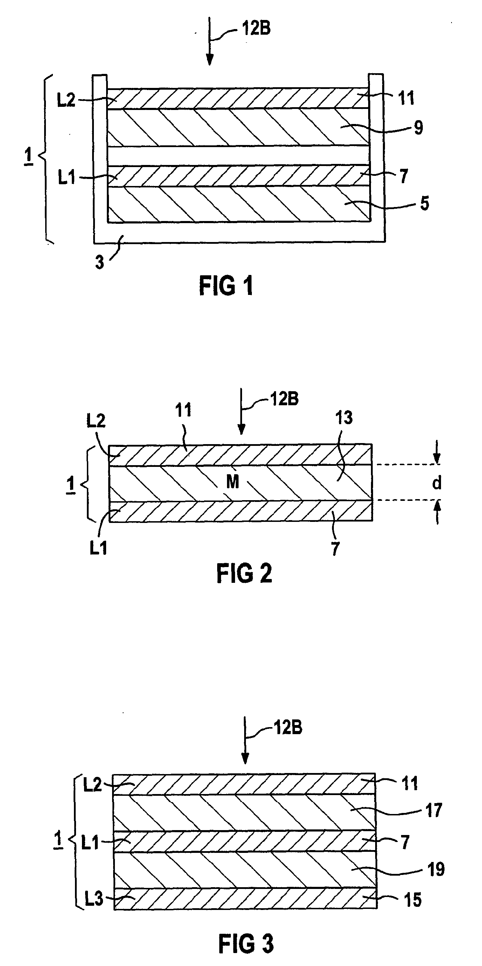

**Figur 1** zeigt einen Röntgenbildspeicher 1 nach der Erfindung in einer ersten Ausführungsform in einer Querschnittdarstellung. Der Röntgenbildspeicher 1 umfasst einen Halterahmen 3, in den passgenau ein erster Träger 5 mit einer darauf aufgebrachten ersten Speicherschicht 7 sowie ein zweiter Träger 9 mit einer hierauf aufgebrachten zweiten Speicherschicht 11 befestigbar sind. Der zweite Träger 9 kann unmittelbar auf der ersten Speicherschicht 7 aufliegen oder es sind - nicht explizit dargestellte - Abstandsmittel vorhanden, auch um Beschädigungen zu vermeiden.

Der Röntgenbildspeicher 1 wird mit Röntgenstrahlen 12B beaufschlagt, welche sowohl zu der ersten Speicherschicht 7 als auch zu der zweiten Speicherschicht 11 gelangen.

Bei der zweiten Ausführungsform eines Röntgenbildspeichers 1 nach der Erfindung gemäß **Figur 2** sind die beiden Speicherschichten 7, 11 auf einander gegenüberliegenden Seiten ein und desselben Substrats 13 aufgedampft. Die Dicke d des Substrats 13 beträgt beispielsweise 0,05 mm bis 0,5 mm. Beispielsweise ist das Substrat 13 eine biegsame Folie aus einem Material M mit einer effektiven Kernladungszahl von weniger als 15, insbesondere aus Aluminium oder Kohlenstoff.

In den beiden Ausführungsbeispielen nach den Figuren 1 und 2 enthält die erste Speicherschicht 7 als ersten Speicherleuchtstoff L1 jeweils europiumdotiertes Rubidiumbromid. Die zweite Speicherschicht 11 enthält als zweiten Speicherleuchtstoff L2 jeweils europiumdotiertes Cäsiumbromid.

Bei dem dritten in **Figur 3** dargestellten Ausführungsbeispiel eines Röntgenbildspeichers 1 nach der Erfindung ist noch eine weitere Speicherschicht 15 mit einem weiteren Speicherleuchtstoff L3 vorhanden, der von den Speicherleuchtstoffen L1, L2 der beiden ersten Speicherschichten 7, 11 in seiner chemischen Zusammensetzung unterschiedlich ist und insbesondere eine unterschiedliche spektrale Empfindlichkeit aufweist. Im gezeichneten Beispiel sind die Speicherschichten 7, 11, 15 endseitig an bzw. zwischen zwei Substraten 17, 19 angeordnet.

Es genügt, falls als Träger eines der Substrate 17, 19 vorhanden ist, und zwei der Speicherschichten unmittelbar übereinander angeordnet sind. Je nach den optischen Eigenschaften im Spektralbereich des Stimulationslichtes kann zwischen den übereinander angeordneten Speicherschichten eine spektrale Filterschicht vorhanden sein, die gewährleistet, dass beim Auslesen Stimulationslicht einer ersten Wellenlänge nur in eine der Speicherschichten und Stimulationslicht einer zweiten Wellenlänge nur in die andere Speicherschicht gelangt.

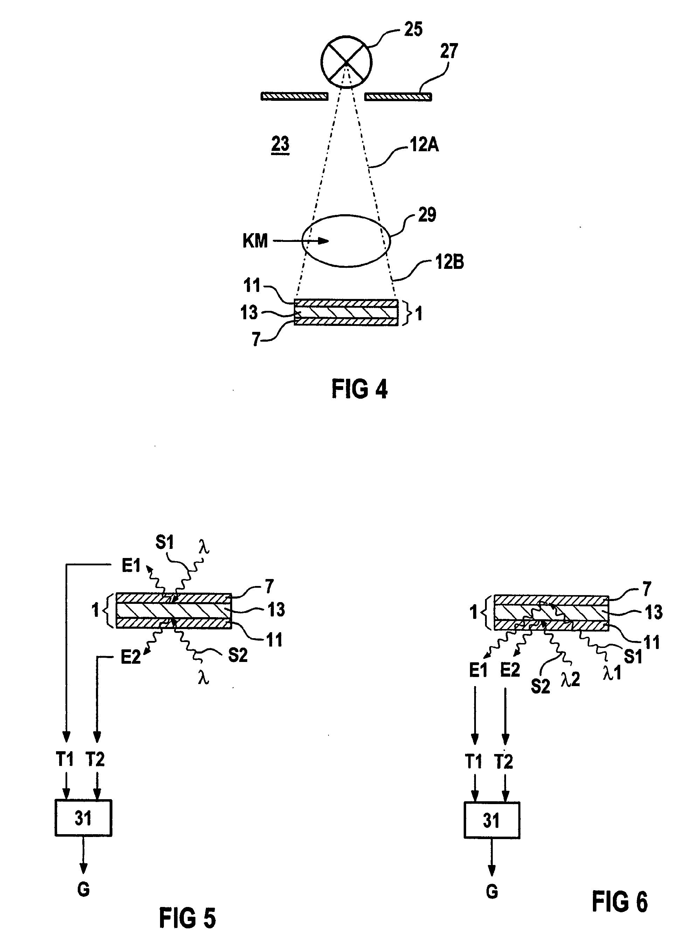

**Figur 4** zeigt, wie bei dem Verfahren nach der Erfindung zur Untersuchung eines Patienten nach dem Prinzip der Subtraktionsangiographie Röntgenstrahlen 12A, 12B gleichzeitig mittels zweier unterschiedliche Speicherleuchtstoffe enthaltender Speicherschichten 7, 11 detektiert werden. Vor Aufnahme des Füllungsbildes und des Maskenbildes in den beiden Speicherschichten 7, 11 wird dem Patienten in die Blutgefäße ein Kontrastmittel KM injiziert. Dargestellt ist ein Röntgengerät 23 mit einer Röntgenröhre 25, von der ein Röntgenstrahlenbündel 12A, 12B, angepasst durch eine Blende 27, emittiert wird. Das Röntgenstrahlenbündel 12A durchstrahlt einen Patienten 29 und der sich dadurch im transmittierten Strahlenbündel 12B abzeichnende bildgebende Kontrast wird von den beiden Speicherschichten 7, 11 des Röntgenbildspeichers 1 simultan aufgezeichnet.

In den **Figuren 5 und 6** sind zwei Varianten dargestellt, nach denen das Bildauslesen und das Bildauswerten bei dem Subtraktionsangiographieverfahren nach der Erfindung in digitaler Weise durchführbar sind. Bei der ersten Variante gemäß **Figur 5** ist das Substrat 13 für das zum Auslesen der in den beiden Speicherschichten 7, 11 gespeicherten Teilbilder T1, T2 eingestrahlte Stimulationslicht S1, S2 undurchlässig. Das Substrat 13 wird von beiden Seiten aus mit Stimulationslicht S1 bzw. S2 gleicher Wellenlänge λ beaufschlagt. Das von den Stimulationslichtstrahlen S1, S2 emittierte Emissionslicht E1 bzw. E2 wird gesondert detektiert und einer gemeinsamen Auswerte-Einrichtung 31 zugeführt, welche ein Differenzbild G als Differenz der beiden Teilbilder T1, T2 erzeugt.

Bei der in **Figur 6** dargestellten alternativen zweiten Variante ist das Substrat 13 für Stimulationslicht S1 einer ersten Wellenlänge λ₁ transparent und für Stimulationslicht S2 einer zweiten Wellenlänge λ₂ undurchlässig. Das als Kanten- oder Bandfilter ausgeführte Substrat 13 ist derart ausgebildet, dass es auch für das vom ersten Stimulationslicht S1 generierte Emissionslicht E1 transparent ist. Auf diese Weise ist es möglich, den Röntgenbildspeicher 1 von einer Seite aus mit Licht zweier unterschiedlicher Wellenlängen λ₁, λ₂ zu beaufschlagen und auf der gleichen Seite zu detektieren. Die aus den unterschiedlichen Emissionslichtern E1, E2 gewonnenen Teilbilder T1, T2 werden analog zu Figur 5 einer Auswerte-Einrichtung 31 zugeführt.

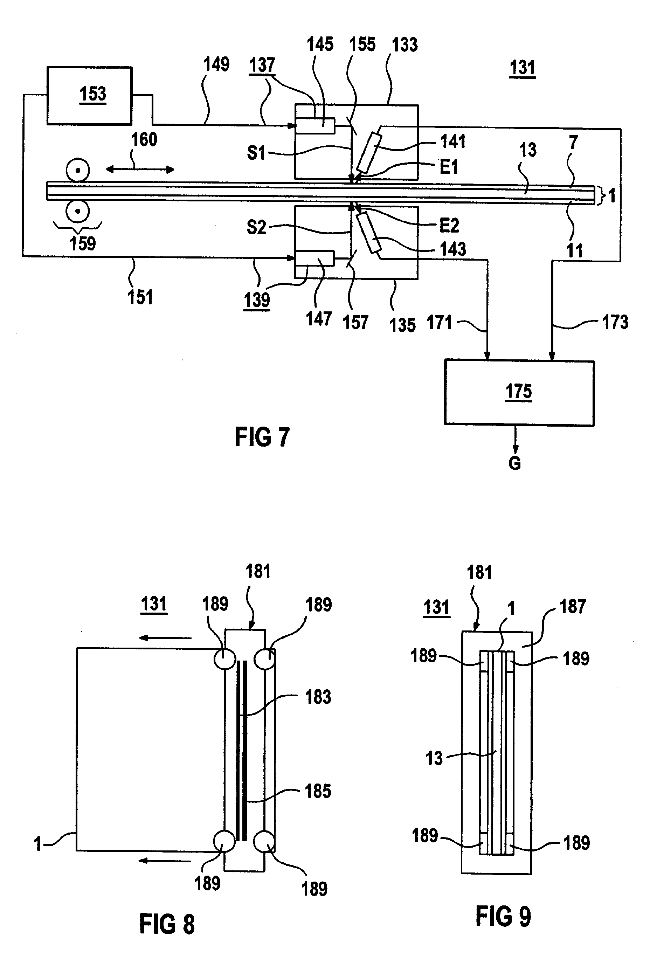

Wie das Auslesen bei Verwendung eines Röntgenbildspeichers 1 (Figur 1) nach der Erfindung mit einem gemeinsamen Substrat 13 im Detail durchführbar ist (zweiter und dritter Schritt des Röntgenverfahrens nach der Erfindung), ist aus **Figur 7** ersichtlich. Darin ist gleichzeitig eine insgesamt mit 131 bezeichnete Vorrichtung zum Auslesen des in dem Röntgenbildspeicher 1 nach der Erfindung gespeicherten Strahlungsbildes beschrieben. Die Vorrichtung 131 umfasst einen ersten Abtastkopf 133 zum Auslesen der ersten Speicherschicht 7 und einen zweiten Abtastkopf 135 zum Auslesen einer zweiten Speicherschicht 11. Die beiden Abtastköpfe 133, 135 sind mechanisch starr miteinander verbunden (nicht explizit dargestellt), so dass die beiden Abtastköpfe 133, 135 auch als gemeinsamer Scankopf aufgefasst werden können. Der erste Abtastkopf 133 weist eine erste Beleuchtungseinrichtung 137 zum abtastenden Beleuchten der ersten Speicherschicht 7 mit Stimulationslicht S1 sowie eine erste Detektoreinrichtung 141 zur Detektion des vom Stimulationslicht S1 der ersten Beleuchtungseinrichtung 137 angeregten Emissionslichts E1 auf. Der zweite Abtastkopf 135 weist gesondert eine zweite Beleuchtungseinrichtung 139 zum abtastenden Beleuchten der zweiten Speicherschicht 11 mit Stimulationslicht S2 und eine zweite Detektoreinrichtung 143 zur Detektion des vom Stimulationslicht S2 der zweiten Beleuchtungseinrichtung 139 angeregten Emissionslichts E2 auf. Die Beleuchtungseinrichtungen 137, 139 umfassen beispielsweise gesonderte Lichtsender oder Laser 145 bzw. 147, welche über Kabel 149 bzw. 151 von einer Quelle 153 elektrisch versorgt sind. Alternativ hierzu könnte bei 153 eine gemeinsame Lichtquelle oder ein gemeinsamer Laser vorgesehen sein, dessen Licht über die dann als Glasfaser ausgeführten Kabel 149, 151 den Abtastköpfen 133 bzw. 135 zugeführt ist. Die Laser emittieren sichtbares Licht.

Im dargestellten Beispiel wird das Stimulationslicht S1 bzw. S2 jeweils von einem gesonderten rotierenden Spiegel 155 bzw. 157 über die erste Speicherschicht 7 bzw. die zweite Speicherschicht 11 zeilenmäßig gescannt. Alternativ hierzu könnte die zeilenmäßige Abtastung auch mit nur einem einzigen rotierenden Spiegel und mit diesem nachgeschaltetem Strahlteiler realisiert sein.

Zur Abtastung der Speicherschichten 7, 11 entlang einer zweiten Achse ("Spalte") ist das Stimulationslicht S1, S2 entweder mittels der rotierenden Spiegel 155, 157 entlang einer zweiten Achse scanbar, oder aber es ist -wie dargestellt - ein Transportsystem 159 zur Bewegung des Bildspeichers 1 durch den Scankopf vorhanden. Angedeutet ist ein Transportsystem 159, welches zwei Rollen umfasst, welche den Bildspeicher 1 antreiben. Alternativ hierzu könnte der Bildspeicher 1 ruhen und der Scankopf von einer nicht dargestellten Antriebseinheit entlang des Doppelpfeils 160 bewegt werden.

Die Detektoreinrichtungen 141, 143 sind nur schematisch angedeutet. Sie umfassen beispielsweise jeweils eine Mikrolinse zum Aufsammeln des Emissionslichts E1, E2 und/oder eine Glasfaser. Das detektierte Emissionslicht E1, E2 oder entsprechende elektrische Signale sind über Leitungen 171, 173 einer Auswerte-Einrichtung 175 zugeführt, welche aus den beiden Einzel- oder Teilbildern der Speicherschichten 7 bzw. 11 ein linear kombiniertes Bild, vorzugsweise ein Differenzbild G, erzeugt.

In der **Figur 8** (Aufsicht) und der **Figur 9** (Querschnitt) ist ein weiteres Ausführungsbeispiel für eine Auslesevorrichtung 131 dargestellt. Bei diesem Ausführungsbeispiel ist der Scankopf 181 mit zwei gesonderten Leuchtdiodenzeilen ausgestattet, wovon eine für die erste Speicherschicht 7 und die andere für die zweite Speicherschicht 11 vorgesehen ist. Sichtbar ist in Figur 8 nur die oben liegende Leuchtdiodenzeile 183. In analoger Weise weist der Scankopf 181 für jede der beiden Speicherschichten 7, 11 einen Zeilendetektor auf, wovon nur der oben liegende Zeilendetektor 185 in Figur 8 ersichtlich ist. Mittels der Leuchtdiodenzeile 183 wird über die gesamte Breite des Bildspeichers 1 Stimulationslicht auf eine der beiden Speicherschichten 7 bzw. 11 emittiert und von dem benachbarten Zeilendetektor 185 das dadurch angeregte Emissionslicht detektiert. Durch einen solchen Scankopf 181 ist der Bildspeicher 1 beispielsweise in ca. 5 Sekunden auslesbar. Die Registrierung der beiden Einzelbilder ist dabei ebenfalls pixelgenau, da sowohl die Detektoren als auch die beiden als CCD-Auslesezeilen realisierten Zeilendetektoren mechanisch fest verbunden sind.

Mit 187 ist ein den Bildspeicher 1 umschließendes Gehäuse des Scankopfs 181 bezeichnet. Mit 189 sind vier Führungselemente zur Führung des Bildspeichers 1 angedeutet. Die Ausgangssignale der Zeilendetektoren sind bei dem in den Figuren 8 und 9 ausgeführten Ausführungsbeispiel analog zur Figur 7 einer Auswerte-Einrichtung zugeführt.

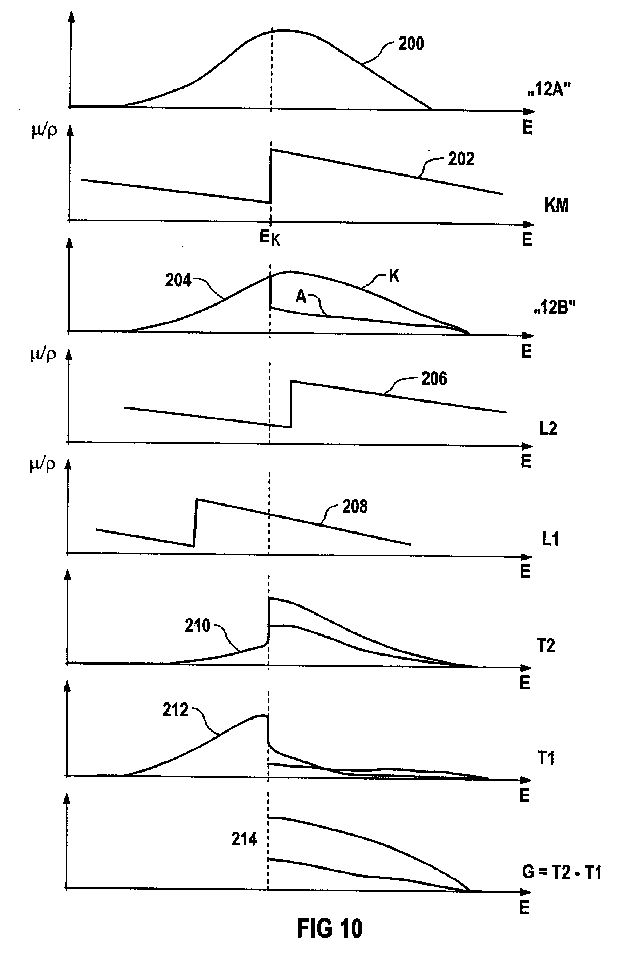

Zum besseren Verständnis der Funktion des Röntgenbildspeichers nach der Erfindung sind in **Figur 10** verschiedene Spektralverläufe in stark vereinfachter Form dargestellt. Auf der horizontalen Achse ist jeweils die Röntgenquantenenergie E aufgetragen. Die jeweiligen Vertikalachsen sind nicht einheitlich skaliert.

Mit 200 ist das Röntgenröhrenspektrum ("Intensität") bezeichnet, wie es beispielsweise in dem Röntgenstrahlenbündel 12A vor dem Patienten 29 (s. Figur 4) messbar wäre. Darunter ist mit 202 der Massenschwächungskoeffizient µ/ρ des Kontrastmittels KM dargestellt. Die K-Absorptionskante des Kontrastmittels KM ist mit E_{K} bezeichnet.

Das Röntgenspektrum 204 ("Intensität") nach dem Patienten 29 im Röntgenstrahlenbündel 12B (s. Figur 4) ist räumlich unterschiedlich. Im Bereich von kontrastmittelhaltigen Arterien A ist die Intensität geringer als in Gebieten daneben, in kontrastmittelfreien Knochen K.

Mit 206 ist die Empfindlichkeit oder der Massenschwächungskoeffizient µ/ρ des zweiten Speicherleuchtstoffs L2 und mit 208 die Empfindlichkeit oder der Massenschwächungskoeffizient µ/ρ des ersten Speicherleuchtstoffs L1 schematisch dargestellt.

Die Kurve 210 zeigt den spektralen Verlauf im Detektorsignal des zweiten Speicherleuchtstoffs L2 und in analoger Weise 212 den spektralen Verlauf im Detektorsignal des ersten Speicherleuchtstoffs L1. In den spektralen Verläufen 210, 212 sind die Unterschiede für zwei unterschiedliche Orte, mit und ohne Kontrastmittel, angegeben. Die Teilbilder T2 bzw. T1 ergeben sich aus der Ortsabhängigkeit der an jedem Ort über die Spektralachse aufsummierten oder aufintegrierten Spektren.

Mit 214 ist der spektrale Verlauf in einem Differenzbild wiedergegeben. Bildgebend für die Auswerte-Einrichtung 31, 175 ist dabei ebenfalls das Spektrumsintegral zu einem Differenzbild G. Aus den dargelegten schematischen Überlegungen ist ersichtlich, dass die beiden unterschiedlichen Speicherleuchtstoffe L1, L2 ihre Hauptempfindlichkeit jeweils oberhalb bzw. unterhalb der K-Kante des verwendeten Kontrastmittels KM haben sollten.

Die Kontrastverstärkung ergibt sich bei dem Röntgenbildspeicher 1 nach der Erfindung im Wesentlichen dadurch, dass Bildkontraste ohne Kontrastmittel in beiden Speicherschichten 7, 11 etwa gleich groß sind und dadurch in der Differenz 214 nahezu verschwinden. Dadurch ist eine wirksame Freistellung jodhaltiger Gefäße im Differenzbild bei der digitalen Subtraktionsangiographie (DSA) erreicht.

Außerdem ergibt sich als weiterer Vorteil in einem Summenbild eine höhere Detektionseffizienz bei niedrigen Röhrenspannungen im Vergleich zur Verwendung nur einer Speicherfolie.

Die beiden Speicherschichten 7, 11 sind bezüglich ihrer - evtl. unterschiedlichen - Schichtdicken dahingehend optimierbar, den Knochenkontrast im Differenzbild weiter zu minimieren.

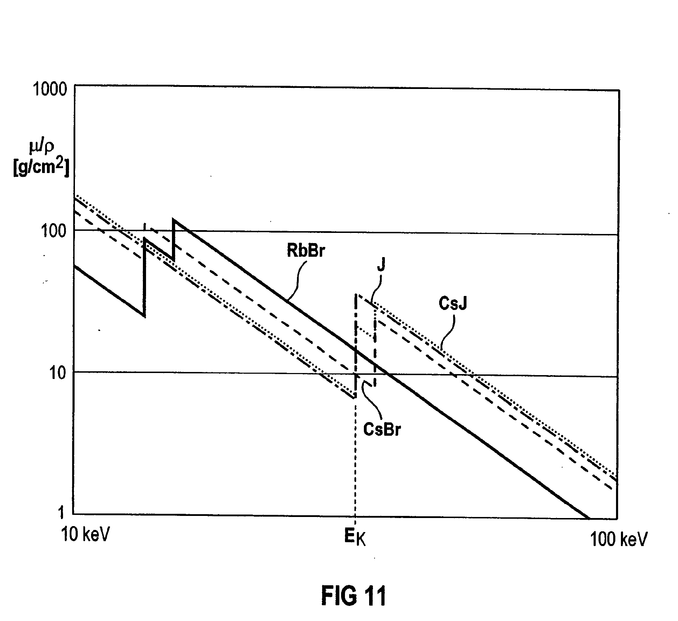

In **Figur 11** ist der Massenschwächungskoeffizient µ/ρ quantitativ für verschiedene Speicherleuchtstoffe und für Jod J als Kontrastmittel KM im Bereich einer Röntgenquantenenergie E zwischen 10 keV und 100 keV dargestellt. Auf der Vertikalachse ist der Massenschwächungskoeffizient µ/ρ logarithmisch aufgetragen. Mit J ist der Verlauf für Jod bezeichnet. Mit CsJ ist der Verlauf für Cäsiumjodid, mit RbBr der Verlauf für Rubidiumbromid und mit CsBr der Verlauf für Cäsiumbromid dargestellt. Die K-Kante des bevorzugten Rubidiumbromids RbBr liegt energetisch unterhalb der K-Kante Eₖ des Jods J. Dagegen liegen starke Absorptionskanten von Cäsiumjodid CsJ oder Cäsiumbromid CsBr in der Nähe oder oberhalb der K-Kante E_{K} des Jods J.

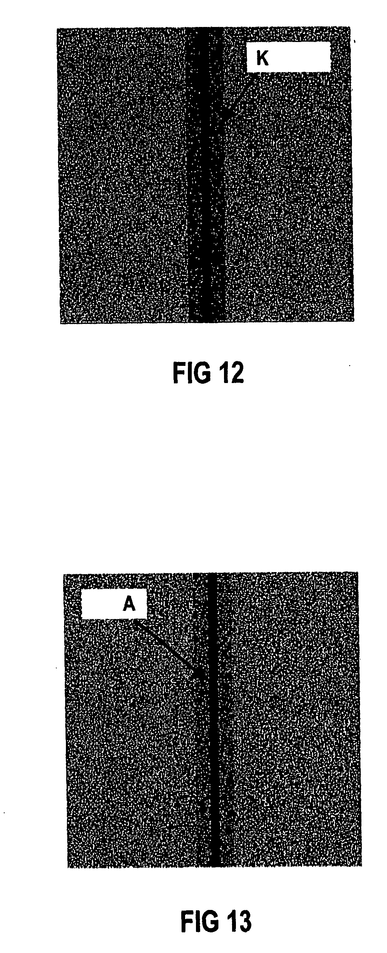

**Figur 12** zeigt eine Simulation eines Summenbildes wie es sich bei der Addition der Teilbilder T1, T2 der beiden Speicherschichten 7, 11 ergeben würde. Dieses Summenbild ist weitgehend identisch mit einem von einer einschichtigen Speicherfolie (mit insgesamt gleicher Dicke) aufgenommenen Bild. Allerdings ist bei dem Summenbild die Detektionseffizienz bei gleichbleibender Bildschärfe verbessert.

**Figur 13** zeigt ein Differenzbild mit deutlich verringertem Kontrast für Knochen K (s. Figur 12), so dass eine Arterie A deutlich hervortritt.

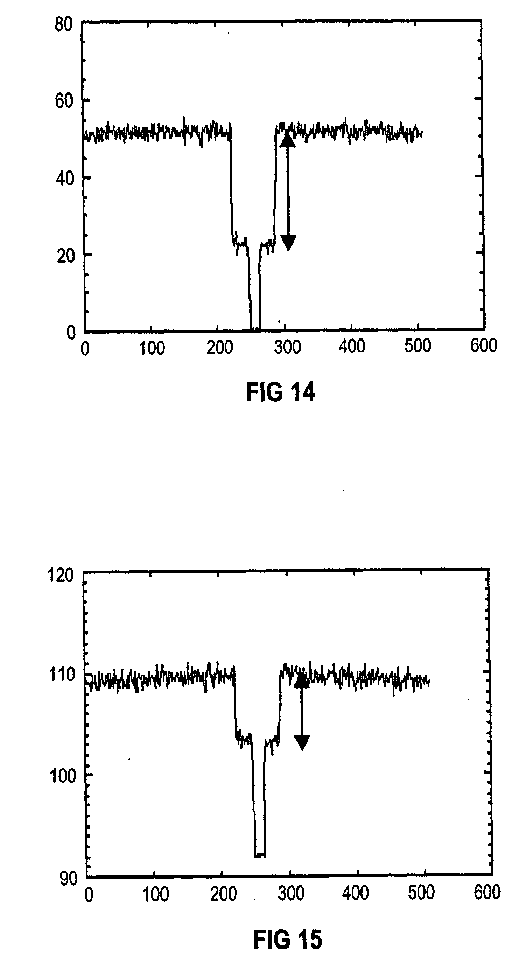

In den **Figuren 14 und 15** sind die Projektionen des Summenbildes gemäß Figur 12 bzw. des Differenzbildes gemäß Figur 13 jeweils auf eine horizontale Ortsachse dargestellt. Man erkennt anhand des eingezeichneten Doppelpfeils den für die Darstellung der Arterie A störenden Kontrast des Knochens K, der in Figur 15 deutlich vermindert ist.

Die Röntgenspannung beträgt in den Ausführungsbeispielen der Figuren 12 bis 15 55 kV. Als Kontrastmittel wird eine Jodlösung von 370 Milligramm Natriumjodid (NaJ) in 1 ml Wasser angenommen.

Der Röntgenbildspeicher 1 nach der Erfindung ist in vorteilhafter Weise mit einem Röntgen-Festkörperbildwandler, beispielsweise mit einem sogenannten CsJ a-SI-Flachdetektor, kombinierbar. Ein solcher Festkörperbildwandler ist beispielsweise in der DE 43 21 789 C2 beschrieben. Er weist in einer Matrix angeordnete lichtempfindliche Zellen auf, die zwei gegeneinander geschaltete Dioden aufweisen, von denen wenigstens eine Diode eine Fotodiode ist. Außerdem sind Treiberschaltungen zur Ansteuerung der Dioden mittels Steuerimpulsen vorhanden, wobei die Dioden zwischen den jeweiligen Zeilen- und Spaltenleitungen der Treiberschaltungen angeschlossen sind. Beispielsweise sind ein Röntgenbildspeicher 1 nach der Erfindung und ein Festkörperbildwandler in baulicher Einheit miteinander verbunden. Ein Problem hierbei wäre der größere Abstand zwischen den beiden Speicherschichten 7, 11, wegen des Gehäuses des Flachdetektors. Dadurch ergäbe sich ein unterschiedlicher Abbildungsmaßstab in den beiden Teilbildern T1, T2, der aber per Software korrigierbar ist.

In dieser beschriebenen Kombination des Röntgenbildspeichers 1 nach der Erfindung mit einem Festkörperbildwandler ergäben sich insgesamt 3 verschiedene Speicherschichten, nämlich die beiden einen Speicherleuchtstoff aufweisenden Speicherschichten 7, 11 sowie den ebenfalls, wenngleich elektronisch, speichernden Flachdetektor. In der Grundversion einer solchen Kombination ist nur eine einzige Speicherschicht vorgesehen. Der Speicherleuchtstoff in der Speicherschicht ist dann von einem Szintillatorstoff (CsJ) im Festkörperbildwandler unterschiedlich und weist von diesem eine unterschiedliche spektrale Empfindlichkeit auf.

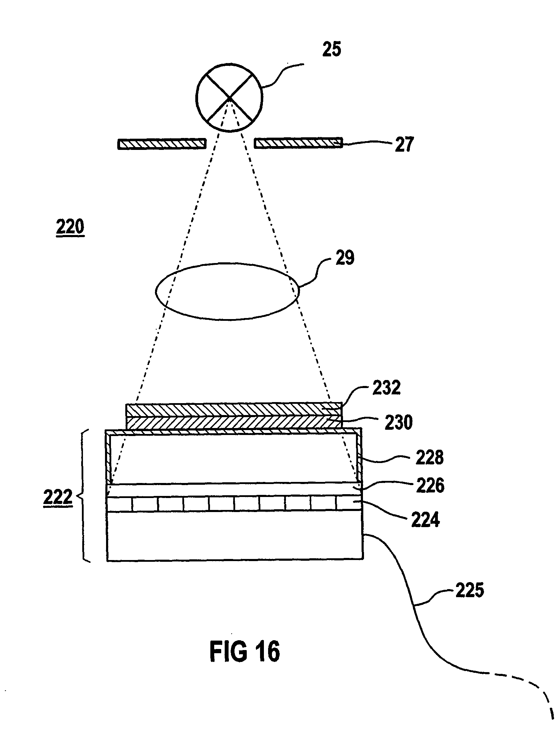

Ein Beispiel für eine Kombination eines Festkörperbildwandlers mit einer Speicherschicht ist in **Figur 16** wiedergegeben. Dort ist ein Röntgenbilddetektor 220 dargestellt, der einen Festkörperbildwandler 222 aufweist. Dieser wiederum umfasst eine über eine Leitung 225 auslesbare Photodioden-Matrix 224, über der eine die einfallende Röntgenstrahlung in Licht umwandelnde, Cäsiumiodid enthaltende Szintillatorschicht 226 aufgebracht ist. Die Photodioden-Matrix 224 besteht aus wasserstoffhaltigem amorphem Silizium (aSi:H). Ihre einzelnen lichtempfindlichen Zellen sind jeweils über nachgeschaltete elektronische Schaltungen auslesbar. Eingangsseitig in Bezug auf die Röntgenstrahlen ist an einem Gehäuse 228 eine Speicherschicht 230 angeordnet und mit dem Gehäuse 228 fest verbunden. Die Speicherschicht 230 enthält beispielsweise Rubidiumbromid (RbBr) als Speicherleuchtstoff. Diese Speicherschicht 230 ist über einen Scanner auslesbar.

Außerdem ist eine weitere Speicherschicht 232 über der Speicherschicht 230 angebracht, die eine von dem Speicherleuchtstoff in der Speicherschicht 230 und von dem Szintillatorstoff in der Szintillatorschicht 226 unterschiedlichen weiteren Speicherleuchtstoff aufweist. Mit diesen drei unterschiedlichen spektralen Empfindlichkeiten sind in besonders effizienter Weise kontrastmittelbasierte Untersuchungen möglich.

## Patentansprüche

1. Röntgenbildspeicher (1) zum Speichern eines Röntgenstrahlungsbildes, insbesondere für die Subtraktionsangiographie, mit einer einen ersten Speicherleuchtstoff (L1) enthaltenden ersten Speicherschicht (7),
**gekennzeichnet durch**
eine zweite Speicherschicht (11), die einen von dem ersten Speicherleuchtstoff (L1) unterschiedlichen zweiten Speicherleuchtstoff (L2) enthält.

2. Röntgenbildspeicher (1) nach Anspruch 1
**dadurch gekennzeichnet, dass** die beiden Speicherschichten (7, 11) starr miteinander verbunden oder starr miteinander verbindbar sind.

3. Röntgenbildspeicher (1) nach Anspruch 1 oder 2,
**dadurch gekennzeichnet, dass** die beiden Speicherschichten (7, 11) auf einander gegenüberliegenden Seiten eines strahlungstransparenten Substrats (13) angebracht, insbesondere aufgedampft, sind.

4. Röntgenbildspeicher (1) nach Anspruch 3,
**dadurch gekennzeichnet, dass** das Substrat (13) ganz oder zum größten Teil aus einem Material (M) mit einer effektiven Kernladungszahl von weniger als 30, vorzugsweise von weniger als 25 und insbesondere weniger als 20 oder 15, besteht, wobei das Material (M) insbesondere Aluminium oder Kohlenstoff ist.

5. Röntgenbildspeicher (1) nach Anspruch 3 oder 4,
**dadurch gekennzeichnet, dass** das das Substrat (13) als Folie ausgebildet ist.

6. Röntgenbildspeicher (1) nach einem der Ansprüche 3 bis 5,
**dadurch gekennzeichnet, dass** das das Substrat (13) lichtundurchlässig ist.

7. Röntgenbildspeicher (1) nach einem der Ansprüche 3 bis 5,
**dadurch gekennzeichnet, dass** das das Substrat (13) für eine Lichtwellenlänge transparent und für eine andere Lichtwellenlänge undurchlässig ist, wobei das Substrat vorzugsweise als Kanten- oder Bandfilter ausgebildet ist.

8. Röntgenbildspeicher (1) nach einem der Ansprüche 1 bis 7,
**dadurch gekennzeichnet, dass** der erste Speicherleuchtstoff (L1) ein Rubidiumhalogenid enthält, insbesondere Rubidiumbromid, Rubidiumjodid und/ oder Rubidiumchlorid.

9. Röntgenbildspeicher (1) nach einem der Ansprüche 1 bis 6,
**dadurch gekennzeichnet, dass** der zweite Speicherleuchtstoff (L2) ein Cäsiumhalogenid enthält, insbesondere Cäsiumbromid, Cäsiumjodid und/ oder Cäsiumchlorid.

10. Röntgenbildspeicher (1) nach Anspruch 8 oder 9,
**dadurch gekennzeichnet, dass** das Halogenid dotiert ist, insbesondere mit Europium, Gallium, Thallium und/ oder Indium.

11. Röntgenbildspeicher (1) nach einem der Ansprüche 1 bis 10,
**gekennzeichnet durch**
wenigstens eine weitere Speicherschicht (15), die einen von dem ersten Speicherleuchtstoff (L1) und dem zweiten Speicherleuchtstoff (L2) unterschiedlichen weiteren Speicherleuchtstoff (L3) enthält.

12. Verwendung eines Röntgenbildspeichers (1) nach einem der Ansprüche 1 bis 11 für die Subtraktionsangiographie, wobei einem Patienten ein Kontrastmittel (KM) verabreicht wird, und
wobei die beiden Speicherleuchtstoffe (L1, L2) und/ oder das Kontrastmittel (KM) derart gewählt werden, dass im Bereich des applizierten Röntgenspektrums die Schwerpunkte der spektralen Empfindlichkeiten der beiden Speicherschichten (7, 11) auf unterschiedlichen Seiten bezüglich einer Empfindlichkeitskante des Kontrastmittels (KM) zu liegen kommen.

13. Verwendung nach Anspruch 12,
wobei die K-Absorptionskanten der beiden Speicherleuchtstoffe (L1, L2) auf unterschiedlichen Seiten bezüglich der Empfindlichkeitskante des Kontrastmittels (KM) zu liegen kommen.

14. Verfahren zur Untersuchung eines Patienten (29) nach dem Prinzip der Subtraktionsangiographie, wobei
a) dem Patienten (29) ein Kontrastmittel (KM) verabreicht wird, und danach
b) der Patient (29) mit Röntgenstrahlen (12A) durchstrahlt wird,
c) die den Patienten (29) durchdringenden Röntgenstrahlen (12B) mittels zweier Speicherschichten (7, 11) detektiert werden, die unterschiedliche Speicherleuchtstoffe (L1, L2) enthalten,
d) die in den Speicherschichten (7, 11) enthaltenen Teilbilder (T1, T2) gesondert - nacheinander oder simultan - ausgelesen werden, und
e) die beiden Teilbilder (T1, T2) linear kombiniert, insbesondere voneinander subtrahiert, werden.

15. Verfahren nach Anspruch 14,
wobei die Detektion der Röntgenstrahlen (12) in den beiden Speicherschichten (7, 11) gleichzeitig oder unmittelbar nacheinander durchgeführt wird.

16. Verfahren nach Anspruch 14 oder 15,
wobei zum simultanen Auslesen die beiden Speicherschichten (7, 11) optisch voneinander getrennt sind, auf beide Speicherschichten (7, 11) gesondert Stimulationslicht (S1, S2) gesendet und vom Stimulationslicht (S1, S2) angeregtes Emissionslicht (E1, E2) jeweils gesondert detektiert wird.

17. Röntgenbilddetektor (220) zur Detektion eines Röntgenstrahlungsbildes, insbesondere für die Subtraktionsangiographie, mit
a) einem Festkörperbildwandler (222), umfassend eine elektronisch auslesbare Photodioden-Matrix (224), auf der eine einen Szintillatorstoff enthaltende Szintillatorschicht (226) aufgebracht ist, und
b) wenigstens einer einen Speicherleuchtstoff enthaltenden Speicherschicht (230), wobei der Szintillatorstoff und der Speicherleuchtstoff voneinander unterschiedlich sind und unterschiedliche spektrale Empfindlichkeiten aufweisen.
